# EUROPÄISCHE PATENTSCHRIFT

(11) **EP 1 136 516 B1**
(45) Veröffentlichungstag und Bekanntmachung des Hinweises auf die Patenterteilung: **05.01.2005**
(21) Anmeldenummer: 01103570.6
(22) Anmeldetag: 20.02.2001
(51) Int. Cl.: C08G 81/02, C08J 3/24, D06M 23/08

(54) **Verwendung einer vernetzbaren Polymerzusammensetzung**
Use of a cross-linkable polymer composition
Utilisation d'une composition de polymère réticulable

(30) Priorität: 23.03.2000 DE 10014399
(43) Veröffentlichungstag der Anmeldung: 26.09.2001
(73) Patentinhaber: Wacker Polymer Systems GmbH & Co. KG, 84489 Burghausen (DE)
(72) Erfinder: Kohlhammer, Klaus, 84533 Marktl (DE); Hashemzadeh, Abdulmajid, Dr., 84508 Burgkirchen (DE)
(74) Vertreter: Schuderer, Michael, Dr.

(56) Entgegenhaltungen:
- EP-A- 0 894 888
- US-A- 4 528 329
- US-A- 5 207 954
- US-A- 5 869 568
- DATABASE WPI Section Ch, Week 198134 Derwent Publications Ltd., London, GB; Class A14, AN 1981-61067D XP002166181 & JP 56 081340 A (TOA GOSEI CHEM IND LTD), 3. Juli 1981 (1981-07-03)

## Beschreibung

Die Erfindung betrifft die Verwendung einer vernetzbaren Polymerzusammensetzung.

Textile Flächengebilde, die nach den üblichen Methoden zur Herstellung von Nonwovens wie beispielsweise nach dem Airlay-, Wetlay-, oder Spunlay-Verfahren produziert werden, benötigen ein Bindemittel zur dauerhaften Fixierung der Fasern sowie zur Erhöhung der Widerstandsfähigkeit gegenüber mechanischer Belastung. Auch bereits mechanisch verfestigte textile Flächengebilde wie beispielsweise Gewebe, Gelege oder genadelte Vliesmatten bedürfen für bestimmte Anwendungen eines Bindemittels. Zu diesen Anwendungen zählen beispielsweise die Verfestigung von Reißbaumwollfasermatten, die mittels einem aerodynamischen Verfahren hergestellt wurden, die Verfestigung von genadelten Naturfasermatten, Binder zum Preforming von Hochleistungsgeweben in Compositanwendungen, das Laminieren von hochreissfesten Geweben in Balistikanwendungen, die Vorbindung von Vliesmatten für faserverstärkte Duroplastkunststoffe oder die Bindung von pulverförmigen Substanzen in ein textiles Flächengebilde wie beispielsweise Aktivkohle in Filtern oder flammhemmender Graphit auf Dachbahnen.

Diese Bindemittel basieren üblicherweise auf synthetischen, hochmolekularen Verbindungen und können nach dem Stand der Technik entweder in Form von Feststoffen, beispielsweise als Pulver, als Granulat oder als Fasern, oder in Form von Flüssigkeiten, beispielsweise als wässrige Polymerdispersionen oder Lösungen aufgebracht werden. Die erhöhte Festigkeit der texti- len Flächengebilde resultiert aus der Bindung der Fasern durch die Polymeren, die an der Faser haften und so die Fasergebilde verstärken.

Aus der WO-A 90/14457 ist eine Verfahrensweise bekannt, bei der Glasfasern nach einem Krempelschritt mit thermoplastischem Pulver, beispielsweise Polypropylen, Polyester oder Polyamid vermischt werden und das Fasergebilde anschließend bei erhöhter Temperatur und unter Druck verfestigt wird. Die AU-B 36659/89 beschreibt ebenfalls die Verfestigung von Glasfasermaterialien mittels thermoplastischen Pulvern. Hier wird der Einsatz von Polyestern oder Polystyrol empfohlen. Nachteilig ist die geringe Festigkeit der so gebundenen Fasergebilde bei Kontakt mit Wasser oder Lösungsmitteln.

Da bei erhöhten Temperaturen häufig auch die Glas- oder die Schmelztemperaturen der Bindemittel überschritten werden, bedarf es einer dauerhaften chemischen Vernetzung der Bindemittel, um den Fasergebilden auch eine Formbeständigkeit bei höheren Temperaturen zu verleihen. Bekannt sind Verfahren zur Verfestigung von Fasermaterialien aus Polyester- Polyamid- oder Baumwollfasern mit selbstvernetzenden Polymerdispersionen EP-A 80144 (US-A 4451315). Man erhält damit zwar Vliesstoffe mit hoher Festigkeit; nachteilig bei der Verwendung von wässrigen Bindemitteln ist allerdings der hohe Trocknungsaufwand, außerdem ist die Verteilung des Bindemittels in der Fasermatrix nicht unproblematisch.

Die Verfestigung von pulverförmigen, vernetzbaren Copolymerisaten auf Basis von Phenol-Formaldehyd-Harzen ist in der US-A 4612224 beschrieben. Nachteilig bei diesem Bindersystem ist die hohe Formaldehydemission bei der Herstellung und Verwendung der so verfestigten Fasermaterialien.

Selbstvernetzende redispergierbare Dispersionspulver auf Basis von N-Methylolacrylamid-haltigen Vinylester-Copolymerisaten oder (Meth-)acrylsäureester-Copolymerisaten als Mittel zur Faserbindung sind in der WO-A 94/20661 (US-A 5668216) beschrieben. Nachteilig bei diesem Bindersystem ist seine relativ hohe Schmelzviskosität, die es erforderlich macht, daß zum Abbinden ein erheblicher Wassereintrag in die Fasermatrix gewährleistet sein muß.

Wärmehärtbare Copolymerisate auf der Basis von Acrylsäureester und/oder Vinylestern, welche noch (Meth-)acrylsäureester von mono- oder polyfunktionellen Hydroxycarbonsäuren und N-Alkoxyalkyl(meth)acrylamid als Vernetzerkomponente enthalten, sind in der DE-A 2701490 (US-A 4129545) als pulverförmige Anstrichmittel beschrieben.

Aus der EP-A 721004 sind vernetzbare, in Wasser dispergierbare Pulver bekannt, die sowohl filmbildende Polymere mit mindestens einer funktionellen Gruppe als auch reaktive Komponenten enthalten, die nach dem Dispergieren in Wasser eine chemische Bindung miteinander ausbilden. Insbesondere eignet sich diese Polymermischung für Anwendungen zum Beschichten, wenn zuvor das Bindemittel in Wasser dispergiert wurde. Eine Anwendung zum Zwecke der Faserbindung in Nonwovens wird in dieser Patentanmeldung nicht diskutiert.

Aus der EP 894888 (US-A 5,977,244) sind chemisch vernetzbare Polymerpulver bekannt, die aus einer trockenen, pulverförmigen, thermoplastischen Copolymerzubereitung bestehen, basierend einerseits auf wässrigen Copolymerdispersionen mit einer Glastemperatur, die oberhalb der Raumtemperatur liegt, und andererseits einer festen, reaktiven Vernetzerkomponente, die einen Schmelzpunkt von weniger als 150°C aufweist. Nachteilig bei dieser Binderzusammensetzung ist, dass die darin verwendeten chemischen Vernetzeragenzien nicht universell einsetzbar sind, sondern mit dem zu vernetzenden Polymeren verträglich sein müssen. Ferner kann in diesen selbstvernetzenden Systemen eine chemische Vernetzungsreaktion erst nach einem entsprechenden Diffusionprozeß der Vernetzersubstanzen in die Polymermatrix hinein stattfinden.

Die US-A 5869568 hat raumtemperaturvernetzende wässrige Polymerdispersionen bestehend aus zweiphasigen Polymerpartikeln mit einem Kern aus epoxidfunktionellem Copolymer und einer Schale aus carboxyfunktionellem Copolymeren, wobei zwischen den Phasen eingeschlossen noch epoxyfunktionelle niedermolekulare Epoxyverbindungen enthalten sind. Diesen Systemen liegt ein Kern-Schale-Aufbau zugrunde, der sich nur mittels eines relativ komplizierten Polymerisationsverfahrens realisieren läßt.

Die US-A 5207954 betrifft wärmehärtbare Pulverbinder, welche in Beschichtungsmitteln eingesetzt werden. Der Derwent-Abstract zur JP-A 56081340 beschreibt vernetzbare, thermoplastische Massen auf PVC-Basis. In der US-A 4528329 werden mit Carbonsäure- bzw. Carbonsäureanhydrid gepfropfte Polyolefine im Gemisch mit polaren, epoxyfunktionellen Copolymeren zur Laminierung von Kunststoffplatten sowie zur Herstellung von Verbunden aus Kunststoff- und Metallplatten eingesetzt.

Der Erfindung lag die Aufgabe zugrunde, Bindemittel, insbesondere für die Verfestigung, bzw. für die Laminierung und Kaschierung von Fasermaterialien zur Verfügung zu stellen, die als Pulver einsetzbar sind, während der Verarbeitung eine niedrigere als dem Stand der Technik entsprechende Schmelzviskosität aufweisen und weitestgehend keine Schadstoffemissionen zulassen, sowie dem Fasergebilde nach der Verarbeitung eine hohe Festigkeit und hohen Wärmestand verleihen.

Gegenstand der Erfindung ist die Verwendung einer vernetzbaren Polymerzusammensetzung als Bindemittel zur Herstellung von Formkörpern aus Fasermaterialien oder aus partikulären Materialien jeweils aus mineralischen Materialien, Kunststoffen oder Naturstoffen, oder Kombinationen davon, in Form deren wässrigen Polymerdispersion oder Polymerpulvers enthaltend
A) ein Copolymer, mit einer Glasübergangstemperatur Tg oder einer Schmelztemperatur von ≥ 30°C, aus einem oder mehreren Comonomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter, Carboxylgruppen enthaltender Comonomere, und
B) ein Copolymer aus einem oder mehreren Comonomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter Comonomere mit funktionellen Gruppen, welche mit den Carboxylgruppen des Copolymers A) eine kovalente Bindung eingehen können.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide wird üblicherweise Vinylchlorid eingesetzt.

Geeignete carboxylfunktionelle Comonomere für Copolymer A) sind ethylenisch ungesättigte Mono- und Dicarbonsäuren, vorzugsweise Acrylsäure, Methacrylsäure, Crotonsäure, Itaconsäure, Fumarsäure und Maleinsäure. Die Carboxylfunktion kann auch durch Copolymerisation von Maleinsäureanhydrid in das Copolymer A) eingeführt werden. Der Anteil an Carboxylgruppen enthaltender Comonomereinheiten in Copolymer A) beträgt vorzugsweise 1 bis 30 Gew.-%, besonders bevorzugt 3 bis 25 Gew.-%, am meisten bevorzugt 5 bis 20 Gew.-%, jeweils bezogen auf das Gesamtgewicht der Comonomere.

Geeignete Comonomere mit vernetzenden, funktionellen Gruppen für Copolymer B) sind Comonomere mit Epoxid-, Organo-, Halogen-, Hydroxy-, Aziridin-, Carbodiimid-, Oxazolin-, Alkohol-, Amin , Aminosilan-, Amino-Formaldehyd-, Isocyanat-, N-2-Hydroxyalkylamid-Rest, vorzugsweise ethylenisch ungesättigte Comonomere mit Epoxid-, Hydroxy- und Isocyanatgruppen.

Besonders bevorzugt werden epoxidfunktionelle Comonomere wie Glycidylacrylat, Glycidylmethacrylat, Allylglycidether, Vinylglycidether, Vinylcyclohexenoxid, Limonenoxid, Myrcenoxid, Caryophyllenoxid, mit einem Glycidylrest im Aromaten substituierte Styrole und Vinyltoluole sowie mit einem Glycidresten im Aromaten substituierte Vinylbenzoate. Am meisten bevorzugt werden Glycidylacrylat, Glycidylmethacrylat, Allylglycidether, Vinylglycidether.

Besonders bevorzugt werden auch hydroxyalkylfunktionelle Comonomere wie Hydroxyalkylacrylate und -methacrylate, beispielsweise Hydroxyethyl-, Hydroxypropyl- und Hydroxybutylester der Acrylsäure und Methacrylsäure. Beispiele für Isocyanat-funktionelle Comonomere sind 2-Methyl-2-isocyanatopropylmethacrylat und Isopropenyl-dimethylbenzylisocyanat (TMI). Der Anteil an vernetzende Gruppen enthaltenden Comonomereinheiten in Copolymer B) beträgt vorzugsweise 1 bis 30 Gew.-%, besonders bevorzugt 3 bis 25 Gew.-%, am meisten bevorzugt 5 bis 20 Gew.-%, jeweils bezogen auf das Gesamtgewicht der Comonomere.

Bevorzugt sind die nachfolgend genannten Polymerzusammensetzungen für die Copolymere A und B, welche noch die eben genannten, funktionelle Gruppen enthaltenden Comonomereinheiten in den eben beschriebenen Mengen aufweisen. Die Angaben in Gew.-%-addieren sich mit dem Anteil an Carboxylgruppen enthaltenden Comonomereinheiten jeweils auf 100 Gew.-%.
Vinylacetat-Polymerisate;
Vinylester-Ethylen-Copolymere, wie Vinylacetat-Ethylen-Copolymere;
Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), enthalten sind;
Vinylacetat-Copolymere mit einem oder mehreren copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9^{R}, VeoVa10^{R}), welche gegebenenfalls noch Ethylen enthalten;
Vinylester-Acrylsäureester-Copolymerisate insbesondere mit Vinylacetat, und Butylacrylat und/oder 2-Ethylhexylacrylat, welche gegebenenfalls noch Ethylen enthalten;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten. Besonders bevorzugt sind dabei (Meth)acrylsäure- und Styrol-Polymerisate:
Copolymerisate mit n-Butylacrylat und/oder 2-Ethylhexylacrylat;
Copolymerisate von Methylmethacrylat mit Butylacrylat und/- oder 2-Ethylhexylacrylat, und/oder 1,3-Butadien;
Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso-, tert-Butylacrylat eingesetzt werden kann.

Vorzugsweise werden die Comonomere in den oben angegebenen Copolymerisaten in einem solchen Verhältnis copolymerisiert, dass sowohl Copolymer A) als auch Copolymer B) einen Schmelzpunkt oder eine Glasübergangstemperatur Tg von ≥ 45°C aufweisen.

Das Mischungsverhältnis der beiden Copolymeren A) und B) beträgt zwischen 1 : 99 und 99 : 1, vorzugsweise liegen Copolymer A) und B) in einem solchen Verhältnis vor, dass das molare Verhältnis an funktionellen Comonomereinheiten von Copolymer A) zu Copolymer B) von 5 : 1 bis 1 : 5 variiert. Besonders bevorzugt werden Mischungsverhältnisse von Copolymer A) zu Copolymer B) von 2:1 bis 1:2, bezogen auf das molare Verhältnis der funktionellen Comonomereinheiten. Für die Polymerzusammensetzung werden die Copolymeren A) und B) so ausgewählt, dass sie miteinander verträglich sind, das heißt auf molekularer Ebene miteinander mischbar sind. Üblicherweise geht man daher so vor, dass die in der Polymerzusammensetzung vorliegenden Copolymere A) und B), abgesehen von den funktionellen Comonomereinheiten, größtenteils aus denselben Comonomereinheiten aufgebaut sind. Am meisten bevorzugt werden daher Zusammensetzungen mit carboxylfunktionellen Styrol-Butylacrylat- und/oder Styrol-Methylmethacrylat-Butylacrylat-Copolymer als Copolymer A) und mit glycidylmethacrylathaltigem Styrol-Butylacrylat- und/oder Styrol-Methylmethacrylat-Butylacrylat-Copolymer als Copolymer B).

Die Herstellung von Copolymer A) und Copolymer B) kann mittels bekannter radikalisch initiierter Polymerisationsverfahren erfolgen, beispielsweise mittels Lösungs- oder wässriger Emulsionspolymerisation. Vorzugsweise werden sowohl Copolymer A) als auch Copolymer B) nach dem Emulsionspolymerisationsverfahren hergestellt. Besonders bevorzugt ist eine Vorgehensweise, bei der eines der beiden Copolymeren A) oder B) mittels Emulsionspolymerisation hergestellt wird, und danach die Comonomeren zur Polymerisation des jeweils anderen Copolymers, unter Bildung von Kern-Schale-Teilchen, polymerisiert werden, und die damit erhaltene Dispersion gegebenenfalls getrocknet wird.

Zur Herstellung der Polymerzusammensetzung werden vorzugsweise die mit dem Emulsionspolymerisationsverfahren jeweils erhaltenen wässrigen Dispersionen der Copolymere A) und B) miteinander vermischt, und anschließend getrocknet. Es kann auch so vorgegangen werden, dass die Dispersionen oder Lösungen der Copolymere A) und B) zunächst jeweils getrocknet werden, und die pulverförmigen Copolymere A) und B) im angegebenen Mischungsverhältnis gemischt werden. Zur Trocknung der Lösungen beziehungsweise Dispersionen können alle gängigen Trocknungsverfahren angewendet werden: Sprühtrocknung, Walzentrocknung, Gefriertrocknung, Bandtrocknung, Koagulation mit anschließender Wirbelschichttrocknung etc. Bevorzugt werden Sprühtrocknungs- und Walzentrocknungsverfahren angewendet.

Die Anwendung der Polymerzusammensetzung erfolgt in Form einer wäßrigen Dispersion oder als Pulver, insbesondere als in Wasser redispergierbares Pulver.

Die Polymerzusammensetzung wird als Bindemittel zur Herstellung von Formkörpern aus Fasermaterialien oder aus partikulären Materialien aus mineralischen Materialien, Kunststoffen oder Naturstoffen wie Holzspänen, Korkpartikeln, Glaspartikel oder Glaspulver, insbesondere Recyclingglas und Hohlglaskugeln oder aus Kombinationen dieser Materialien eingesetzt. Je nach Anwendung erfolgt die Herstellung der Formkörper bei Raumtemperatur oder bei erhöhter Temperatur, gegebenenfalls unter erhöhtem Druck.

Die Temperatur für die Verfestigung der Formkörper beträgt im allgemeinen von 20°C bis 220°C. Wird bei erhöhter Temperatur gearbeitet, beträgt diese vorzugsweise 90 bis 220°C. Falls die Herstellung der Formkörper unter Druck erfolgt, werden Drucke von 1 bis 200 bar bevorzugt. Die Polymerzusammensetzung wird dabei im allgemeinen in einer Menge von 3 bis 50 Gew.-%, bezogen auf das zu bindende Material eingesetzt. Die Bindermenge richtet sich nach dem zu bindenden Substrat und liegt im Falle von Polyesterfasern, Baumwollfasern zwischen 4 und 30 Gew.-%, im Falle von Naturfasern, wie Hanf, Flachs, Sisal, Jute, beispielsweise für Anwendungen im Automobilinnenausbau, vorzugsweise im Bereich von 20 bis 40 Gew.-%. Im Falle von Glas- und Mineralfasern sowie bei anderen mineralischen Materialien, wie Glasskugeln liegt der bevorzugte Bereich zwischen 4 und 30 Gew.-%.

Die bevorzugte Anwendung ist die als Bindemittel für Fasermaterialien. Als Fasermaterial sind natürliche oder synthetische Rohstoffe geeignet. Beispiele hierfür sind Kunstfasern auf der Basis von faserbildenden Polymeren wie Viskose-, Polyester-, wie Polyesterhäckselfasern, Polyamid-, Polypropylen-, Polyethylen-Fasern. Geeignet sind auch Mineralfasern, wie Glasfasern, Keramikfasern, Kohlefasern. Beispiele für natürliche Fasermaterialien sind Holz-, Cellulose-, Woll-, Baumwolle-, Jute-, Flachs-, Hanf-, Kokos-, Ramie- und Sisalfasern. Die Fasern können auch in Form von gewebten Textilien, von Garnen, oder in Form von Nonwovens wie Gelegen oder Gewirken eingesetzt werden. Diese Nonwovens können gegebenenfalls mechanisch vorverfestigt, beispielsweise genadelt, sein.

Bevorzugt werden die Verwendung als Vorbinder in Fasermatten, Geweben und Gelegen für faserverstärkte Kunststoffe; die Verwendung als Bindemittel für Preforminganwendungen von Geweben und Gelegen in faserverstärkten Kunststoffen, wobei die bevorzugte Bindermenge zwischen 3 und 10 Gew.-% beträgt, mehr bevorzugt zwischen 4 und 6 Gew.-%; die Verwendung als Trockenbindemittel in Kombination mit anderen pulverförmigen organischen oder anorganischen Substanzen; und die Verwendung als Bindemittel zur Laminierung von Fasermatten auf expandierenden bzw. expandierten Partikelschaum. Hier liegt die bevorzugte Bindermenge zwischen 20 und 100 g/m², besonders bevorzugt zwischen 30 und 70 g/m².

In diesen Anwendungen kann so vorgegangen werden, dass die Fasern, gegebenenfalls zusammen mit organischen oder anorganischen Füllstoffen mit der erfindungsgemäßen Polymerzusammensetzung gemischt werden, die Faser/Pulvermischung nach den üblichen Verfahren der Nonwovenstechnologie, gegebenenfalls nach Kardieren der Faser/Pulvermischung und Nadeln ausgelegt wird, und durch Temperaturerhöhung, gegebenenfalls unter Anwendung von Druck und/oder Heißdampf gebunden wird.

Die Faserbindung kann auch mittels Einstreuen der erfindungsgemäßen Polymerzusammensetzung in ein Gewebe, Gelege oder in ein zuvor abgelegtes Faserbett erfolgen, und ,gegebenenfalls nach Kardieren der Faser/Pulvermischung und Nadeln, das Bindepulver durch Temperaturerhöhung, gegebenenfalls unter zusätzlicher Anwendung von Druck und oder Heißdampf, aufgeschmolzen und gehärtet werden.

Die Polymerzusammensetzung eignet sich auch zum Kaschieren oder Laminieren zweier oder mehrerer Gewebe, Gelege oder Nonwovens miteinander, wobei die Polymerzusammensetzung als Bindemittel zwischen den beiden miteinander zu verklebenden Substraten. Dazu wird die Polymerzubereitung zwischen die Schichten eingetragen und durch Temperaturerhöhung, gegebenenfalls unter zusätzlicher Anwendung von Druck und oder Heißdampf, das Laminat gebunden.

In einer bevorzugten Ausführungsform wird zum Kaschieren eines fertigen Formteils eine pulverförmige Polymerzusammensetzung auf ein textiles Flächengebilde aufgestreut und gegebenenfalls der Binder bei erhöhter Temperatur auf dem textilen Flächengebilde fixiert (angesintert). Anschließend wird das derartig behandelte textilen Flächengebilde auf ein bereits fertiges Formteil, beispielsweise auf ein geschäumtes Formteil, aufkaschiert, unter Anwendung eines erhöhten Druckes und einer erhöhten Temperatur. Gegebenenfalls kann das Formteil zur Restentgasung sowie zur Herstellung der endgültigen Formstabilität und des Endmaßes thermisch nachbehandelt werden.

Alernativ dazu kann die Polymerzusammensetzung auf ein bereits geschäumtes Formteil aufgetragen werden, und gegebenenfalls auf dem Formteil bei erhöhter Temperatur fixiert (angesintert) werden. Anschließend wird auf das derartig behandelte Formteil, unter Anwendung eines erhöhten Druckes und einer erhöhten Temperatur, entweder in dem entsprechenden Formwerkzeug oder außerhalb des zum Schäumen verwendeten Formwerkzeuges, ein textiles Flächengebildeaufkaschiert. Gegebenenfalls kann das Formteil zur Restentgasung sowie zur Herstellung der endgültigen Formstabilität und des Endmaßes thermisch nachbehandelt werden.

Eine besonders bevorzugte Anwendung der Polymerzusammensetzung in Pulverform ist die im Inmould-Skinnig. In einer ersten Verfahrensvariante wird das Pulver auf ein textiles Flächengebilde aufgetragen und gegebenenfalls durch ansintern fixiert. Das derartig behandelte textile Flächengebilde wird in ein geeignetes Formwerkzeug eingelegt und die zu schäumenden Polymerpartikel zugegeben. Die Partikel werden im Formwerkzeug aufgeschäumt, wobei der Schaum gegen das mit dem Binder behaftete textile Flächengebilde geschäumt wird. Anschließend erfolgt die Entformung des kaschierten Formteils.

In einer zweiten Variante wird ein textiles Flächengebilde in ein geeignetes Formwerkzeug eingelegt, das Polymerpulver auf das in das Formwerkzeug eingelegte textile Flächengebilde aufgetragen und gegebenenfalls durch ansintern fixiert.Die zu schäumenden Polymerpartikel werden zugegeben und aufgeschäumt. Anschließend wird das kaschierte Formteil entformt und gegebenenfalls zur Restentgasung sowie zur Herstellung der endgültigen Formstabilität und des Endmaßes thermisch nachbehandelt. In einer dritten Variante wird zunächst ein textiles Flächengebilde mit einem thermoplastischen Polymeren (z.B. Polyethylen, Polypropylen, Polyester) durch Kaschieren oder durch Beschichten mittels einer entsprechenden thermoplastischen Polymerschmelze beschichtet, und anschließend die pulverförmige Polymerzubereitung auf die unbeschichtete Seite des textilen Flächengebildes aufgetragen, und gegebenenfalls durch ansintern fixiert. Das so vorbehandelte textile Flächengebilde wird in das Formwerkzeug, die zu schäumenden Polymerpartikel zugegeben und aufgeschäumt, wobei der Schaum gegen das textile Flächengebilde geschäumt wird. Entformung und gegebenenfalls thermische Nachbehandlung des Formteils erfolgen analog den beiden ersten Varianten.

Die erfindungsgemäße Polymerzusammensetzung zeichnet sich durch eine überraschend niedrige Schmelzviskosität aus, obwohl vernetzbare Verbindungen in der Polymerschmelze zugegen sind. Es wurde ein Bindemittel, insbesondere für den Textilbereich zugänglich, welches gegenüber vorbekannten wesentlich rascher aushärtet, einen höheren Wärmestand ergibt und eine extrem niedrige Schmelzviskosität oberhalb der Glastemperatur des Harzes aufweist.

Die Polymerzusammensetzung eignet sich in Pulverform auch zur Bindung von pulverförmigen Substraten in Fasermaterialien. Dazu wird das Polymerpulver mit organischen oder anorganischen pulverförmigen Substanzen in trockenem Zustand gemischt, diese Mischung auf ein textiles Flächengebilde oder in ein Faserbett aufgestreut oder eingestreut, und das Bindepulver durch Temperaturerhöhung, gegebenenfalls unter zusätzlicher Anwendung von Druck und oder Heißdampf, ausgehärtet und dadurch eine Bindung zwischen den organischen bzw. anorganischen Pulvern und den Fasern bewirkt.

Die nachfolgenden Beispiele dienen der weiteren Erläuterung der Erfindung:

### Beispiel 1:

### Herstellung eines carboxylfunktionellen Styrol-Butylacrylat-Methacrylsäure-Acrylamid-Mischpolymerisats

In einem Reaktor mit 3 Liter Volumen wurden 838.8 g deionisiertes Wasser und 6.7 g Natriumlaurylsulfat vorgelegt und unter Stickstoff beim Rühren auf 80°C aufgeheizt. Bei dieser Temperatur wurde die Initiatorlösung (6.7 g Kaliumperoxodisulfat und 218.4 g Wasser) in den Reaktor gegeben und aus separaten Behältern wurden innerhalb von 4 Stunden folgende Zusammensetzungen in den Reaktor zudosiert:
Monomerdosierung 1 mit 67.3 g Methacrylsäure, 403.7 g Butylacrylat, 861.3 g Styrol und 6.7 g Dodecylmercaptan.
Monomerdosierung 2 mit 67.3 g Wasser, 44.9 g einer 30 %-igen, wässrigen Acyrylamid-Lösung.
Sowie eine Initiatordosierung mit 217.6 g Wasser und 6.7 g Kaliumperoxodisulfat.
Nach den Dosierungen wurde ca. 2 Stunden bei 80°C nachpolymerisiert und mit Hilfe von Ammoniak auf einen pH-Wert von 8 eingestellt.

### Beispiel 2:

### Herstellung eines carboxylfunktionellen Styrol-Butylacrylat-Methacrylsäure-N-Methylolacrylamid-Mischpolymerisats

In einem Reaktor mit 3 Liter Volumen wurden 855 g deionisiertes Wasser und 6.7 g Natriumlaurylsulfat vorgelegt und unter Stickstoff beim Rühren auf 80°C aufgeheizt. Bei dieser Temperatur wurde die Initiatorlösung (6.7 g Kaliumperoxodisulfat und 217.4 g Wasser) in den Reaktor gegeben und aus separaten Behältern wurden innerhalb von 4 Stunden folgende Zusammensetzungen in den Reaktor zudosiert:
Monomerdosierung 1 mit 67.2 g Methacrylsäure, 403.4 g Butylacrylat, 860.5 g Styrol und 6.7 g Dodecylmercaptan.
Monomerdosierung 2 mit 67.3 g Wasser, 28.0 g einer 48 %-igen, wässrigen Lösung von N-Methylolacrylamid.
Eine Initiatordosierung mit 217.4 g Wasser und 6.6 g Kaliumperoxodisulfat.
Nach den Dosierungen wurde ca. 2 Stunden bei 80°C nachpolymerisiert und mit Hilfe von Ammoniak ein pH-Wert von 8 eingestellt.

### Beispiel 3:

### Herstellung eines epoxydfunktionellen Styrol-Butylacrylat-Glycidylmethacrylat-Mischpolymerisats

In einem Reaktor mit 3 Liter Volumen wurden 667.1 g deionisiertes Wasser, 2.5 g Natriumbicarbonat und 10 g Natriumlaurylsulfat, 3.0 g Kaliumperoxodisulfat, 74.7 g Styrol und 49.8 g Butylacrylat vorgelegt und unter Stickstoff beim Rühren auf 75°C aufgeheizt. Die Vorlage wurde bei 75°C ca. 15 Minuten polymerisiert und anschließend mit den Dosierungen von Monomermischung, Emulgatorlösung und Initiatorlösung in den Reaktor aus separaten Behältern begonnen. Die Monomermischung und Emulgatorlösung wurde innerhalb von 4 Stunden und die Initiatorlösung innerhalb 5 Stunden dosiert.
Die Monomerdosierung bestand aus 49.8 g Glycidylmethacrylat, 248.9 g Butylacrylat, 572.5 g Styrol und 5.0 g Dodecylmercaptan.
Die Emulgatordosierung bestand aus 262.4 g Wasser und 10.0 g Natriumlaurylsulfat.
Die Initiatordosierung bestand aus 99.6 g Wasser und 3.0 g Kaliumperoxodisulfat.
Nach der Dosierung der Monomermischung wurde die Polymerisationstemperatur auf 80°C erhöht. Nach der Beendigung der Initiatordosierung wurde ca. 1 Stunde bei 80°C nachpolymerisiert. Der pH-Wert während der Polymerisation lag zwischen 6.5 und 7.0. Nach der Abkühlung wurde der pH-Wert mit Ammoniaklösung auf 7.5 eingestellt. Der Feststoffgehalt der Dispersion lag bei 50 % und die Viskosität bei 2420 mPas.

### Beispiel 4:

### Herstellung eines epoxydfunktionellen Styrol-Butylacrylat-Glycidylmethacrylat-Mischpolymerisats

Es wurde wie in Beispiel 3 vorgegangen, aber die Glycidylmethacrylatmenge in der Monomermischung auf 24.9 g reduziert und die Styrolmenge auf 597.4 g erhöht.

Nach der Abkühlung wurde der pH-Wert mit Amoniaklösung auf 7.5 eingestellt. Der Feststoffgehalt der Dispersion lag bei 50 % und die Viskosität bei 2300 mPas.

### Beispiel 5:

### Herstellung der vernetzbaren Polymerzusammensetzung

Die Polymerdispersionen aus den Beispielen 1 und 3 wurden im Gewichtsverhältnis 1:1 (fest:fest) miteinander vermischt und sprühgetrocknet. Es resultierte ein rieselfähiges Pulver mit einer Korngröße von ca. 25 µm (Volumenmittel). Im DSC-Experiment wurde eine Glasübergangstemperatur von 49°C und ein exothermer DSC-Peak bei 185°C gemessen. Das Pulver bildete oberhalb von 150°C eine klare Polymerschmelze. Als Maß für die chemische Vernetzungsfähigkeit des Polymeren wurde neben dem exothermen DSC-Peak zusätzlich die Bestimmung der Gelzeit herangezogen; das ist der Zeitraum zwischen dem Aufschmelzen des Pulver zu einer klaren Flüssigkeit und dem Gelieren dieser Schmelze zu einer festen Masse. Die Gelzeit bei 210°C betrug 20 sec.

### Beispiel 6:

### Herstellung der vernetzbaren Polymerzusammensetzung

Die Polymerdispersionen aus den Beispielen 1 und 4 wurden im Gewichtsverhältnis 1 : 1 (fest : fest) miteinander vermischt und sprühgetrocknet. Es resultierte ein rieselfähiges Pulver mit einer Korngröße von ca. 20 µm (Volumenmittel). Im DSC-Experiment wurde eine Glasübergangstemperatur von 48°C und ein exothermer DSC-Peak bei 182°C gemessen. Das Pulver schmolz oberhalb von 150°C zu einer klaren Polymerschmelze. Die Gelzeit bei 210°C betrug 40 sec.

### Vergleichsbeispiel 7:

Die Dispersion aus Beispiel 2 wurde sprühgetrocknet und 98 Gew.-Teile des Pulvers mit 2 Gew.-Teilen eines pulverförmigen Epoxydvernetzer (Epicote) vermischt.

### Herstellung der Faserformkörper zur Testung:

### Nass verpresste Formkörper:

Zur Herstellung von Pressplatten wurden 115 g Reissbaumwolle mit 13.2 g Bindepulver aus den Beispielen 5, 6 und Vergleichsbeispiel 7 vermischt und auf einer Fläche von 24 x 24 cm ausgebreitet. Die Faser/Pulvermischungen wurden noch mit 40 g Wasser mittels Sprühauftrag angefeuchtet und sofort anschließend bei einer Temperatur von 180°C 5 min lang verpresst, so dass hart verpresste Platten mit 2 mm Dicke bzw. weiche, 10 mm dicke Platten mit einem Flächengewicht von ca. 2200 g/m² und einem Raumgewicht von ca. 1115 kg/m³ bzw. 223 kg/m³ erhalten wurden.

### Trocken verpresste Formkörper:

Zur Herstellung von Pressplatten wurden 115 g Reissbaumwolle mit 13.2 g Bindepulver aus den Beispielen 5, 6 und Vergleichsbeispiel 7 vermischt und auf einer Fläche von 24 x 24 cm ausgebreitet. Die Faser/Pulvermischungen wurden sofort anschliessend bei Temperaturen von ca. 180°C 5 min lang verpresst, so dass hart verpresste Platten mit 2 mm Dicke bzw. weiche 10 mm dicke Platten mit einem Flächengewicht von ca. 2200 g/m² und einem Raumgewicht von ca. 1115 kg/m³ bzw. 223 kg/m³ erhalten wurden.

### Testmethoden zur Prüfung:

### Höchstzugkraft HZK:

Aus den verpressten faserigen Formkörpern wurden Prüfkörper (Abmessungen: 10 mm x 100 mm ) herausgestanzt und bei Raumtemperatur auf einer Zwick-Zugprüfmaschine (analog DIN 53857) geprüft.

### Wasseraufnahme:

Zur Bestimmung der Wasseraufnahme wurden die Prüfkörper (Abmessung: 50 mm x 20 mm) für 1 h bzw. 24 h in Wasser gelagert und die Gewichtsaufnahme infolge Wasserquellung gravimetrisch bestimmt.

### Wärmestandvermögen:

Zur Prüfung hinsichtlich des Wärmestandvermögens wurden 240 mm x 20 mm lange Streifen aus den Prüfkörpern geschnitten. Diese Streifen wurden waagerecht auf einer planen Unterlage fixiert, so daß die Streifen mit einer Länge von 100 mm über den Rand der Unterlage überstanden. Im Falle der harten Formkörper (Plattendicke: 2 mm) wurde ein 40 g-Gewicht angehängt, während die weichen Formkörper (Plattendicke: 10 mm) nur der Schwerkraft ihres Eigengewichts ausgesetzt waren. Das Wärmestandvermögen wurde durch Messung der Durchbiegung d nach einer einstündigen Lagerung bei T=120°C ermittelt.

### Die Testergebnisse sind in den Tabellen 1 und 2 zusammengefasst:

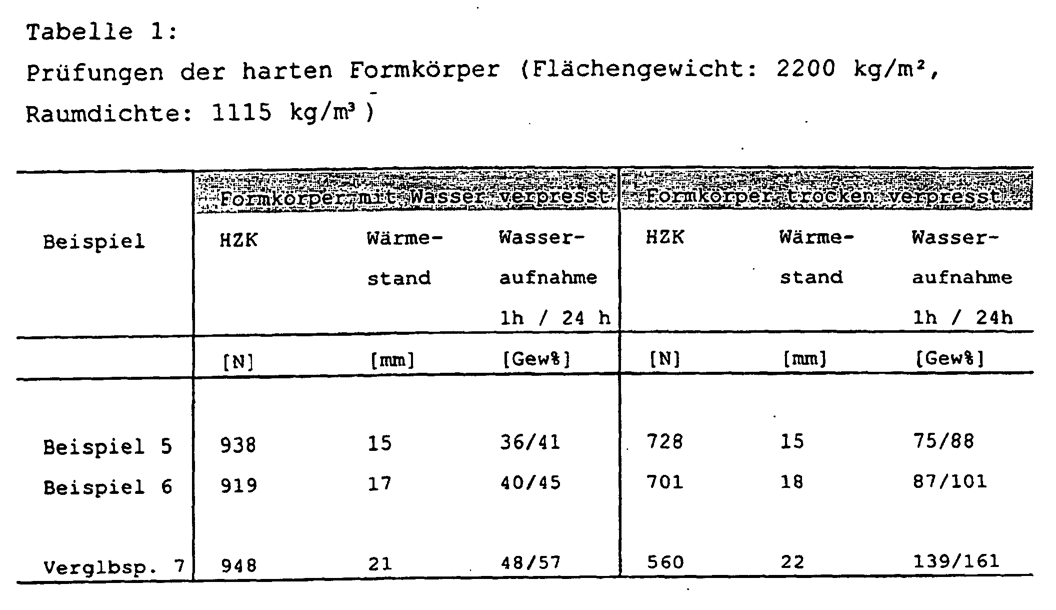

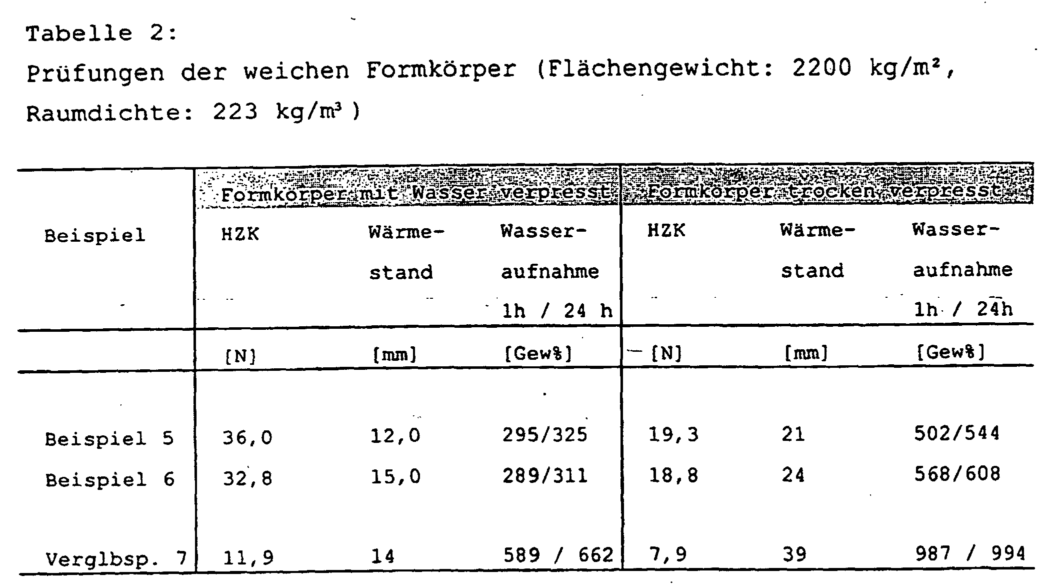

### Beispiel 8:

### Herstellung eines Kaschiererzeugnisses aus expandierendem Partikelschaum und einem Glasfaservlies.

Das Polymerpulver aus Beispiel 5 wurde mittels eines elektrostatischen Sprühauftrages gleichmäßig auf eine Glasfasermatte (Flächengewicht ca. 30 g/m²) aufgetragen (Auftragsgewicht: ca. 30 g/m²) und bei 180°C/90 sec angesintert. Das so behandelte Glasvlies wurde anschließend bei 120°C mit ca. 1.2 bar gegen ein geschäumtes Formteil aus EPS/PPO kaschiert. Zur Prüfung der Verbundfestigkeit wurde das kaschierte Formteil 1 h bei 90°C gelagert. Anschließend wurde versucht das aufkaschierte Glasvlies händisch abzuschälen.

Ergebnis: Das Glasvlies ließ sich nicht mehr von der Schaumoberfläche ablösen. Vielmehr wurden die Glasfasern aus dem Glasvlies bzw. Schaumpartikel aus der Oberfläche des Formteils herausgerissen, ohne dass es beim Glasvlies/Formteil-Verbund zu einer Delaminierung kam.

### Beispiel 9:

Das Polymerpulver aus Beispiel 6 wurde mittels eines elektrostatischen Sprühauftrages gleichmäßig auf eine Glasfasermatte (Flächengewicht ca. 30 g/m²) aufgetragen (Auftragsgewicht: ca. 50 g/m²) und bei 170°C/2 min angesintert. Das so behandelte Glasvlies wurde anschließend in ein geeignetes Formwerkzeug eingelegt, und die zu expandierenden PS/PPO-Partikel zugegeben. Anschließend wurde die PS/PPO-Partikel mit Heißdampf gegen das Glasvlies geschäumt. Der so hergestellte Formkörper wurde entformt und bei 80°C über mehrere Stunden entgast. Zur Beurteilung der Festigkeit nach einem Klimawechsel wurde das kaschierte Schaumteil insgesamt dreimal abwechselnd jeweils mehrere Stunden bei 90°C und -20°C gelagert. Anschließend wurde versucht das aufkaschierte Glasvlies händisch abzuschälen.
Ergebnis: Das Glasvlies ließ sich nicht mehr von der Schaumoberfläche ablösen. Vielmehr wurden die Glasfasern aus dem Glasvlies bzw. Schaumpartikel aus der Oberfläche des Formteils herausgerissen, ohne dass es beim Glasvlies/Formteil-Verbund zu einer Delaminierung kam.

### Vergleichsbeispiel 10

Ein Polyethylenpulver wurde mittels eines elektrostatischen Sprühauftrages gleichmäßig auf eine Glasfasermatte (Flächengewicht ca. 30 g/m²) aufgetragen (Auftragsgewicht: ca. 30 g/m²) und bei 180°C/90 sec angesintert. Das so behandelte Glasvlies wird anschließend bei 120°C mit ca. 1,2 bar gegen ein geschäumtes Formteil aus EPS/PPO kaschiert. Zur Prüfung der Verbundfestigkeit wird das kaschierte Formteil 1h bei 90°C gelagert. Anschließend wird versucht das aufkaschierte Glasvlies händisch abzuschälen. Ergebnis: Das Glasvlies läßt sich mühelos vom geschäumten Formteil abschälen. Die angestrebte Verbundfestigkeit wurde also nicht erzielt.

### Beispiel 11:

Auf 12 Lagen eines Aramidfasergewebes (Köperbindung) mit einer Fläche von 30 cm x 30 cm wurde das Polymerpulver aus Beispiel 5 in einer Menge von ca. 30 g/m² mittels einer elektrostatischen Pulversprühpistole aufgetragen. Die so behandelten Gewebe wurden 2 min bei 170°C behandelt, um das Pulver an die Fasern anzusintern. Anschließend wurden die 12 Lagen aufeinandergestapelt und bei 180°C und einem Druck von 1 bar zusammengepresst. Es wurde eine starre Aramidfaserplatte mit einer Schichtdicke von etwas 6 mm erhalten.

### Vergleichsbeispiel 12:

12 Lagen eines Aramidfasergewebes (Köperbindung) mit einer Fläche von 30 cm x 30 cm wurden mit einer Phenol-Formaldehydharzlösung mit ca. 30 g/m² getränkt. Die so imprägnierten Gewebe wurden anschließend aufeinandergestapelt und bei 180°C und einem Druck von 1 bar zusammengepresst. Es wurde ebenfalls eine starre Aramidfaserplatte mit einer Schichtdicke von etwas 6 mm erhalten.

### Vergleichsbeispiel 13:

12 Lagen eines Aramidfasergewebes (Köperbindung) mit einer Fläche von 30 cm x 30 cm wurden mit einer 50 %-igen wässrigen Dispersion eines Styrol-Butylacrylat-Copolymeren mit 5 % Acrylsäureanteil und 5 % Epoxidvernetzer (Epicote) in einer Menge von ca. 30 g/m² beschichtet. Die so imprägnierten Gewebe wurden anschließend aufeinandergestapelt und bei 180°C und einem Druck von 1 bar zusammengepresst. Es wurde ebenfalls eine starre Aramidfaserplatte mit einer Schichtdicke von etwas 6 mm erhalten.

### Untersuchung zur Beschußfestigkeit

Zur Überprüfung der Beschußfestigkeit wurden die Laminate aus 10 m Entfernung mit Weichkernmunition beschossen. Während das Laminat aus Beispiel 11 dem Beschuß standhielt und kein Durchschuß erhalten wurde, wurde mit den Laminaten aus den Vergleichsbeispielen 12 und 13 nur Durchschüsse erhalten.

### Herstellung einer Glasfasermatte:

Zur Herstellung einer Glasfasermatte wurden Glasrovings statistisch auf einer Trägerplatte ausgebreitet und jeweils gleichmäßig mit einem Pulver aus dem Beispiel 5 bestreut. Der Pulverauftrag betrug 5 Gew.-%, bezogen auf das Fasergewicht. Zur Verfestigung wurde die Trägerplatte mit dem Faser/Pulver-Gemisch für 3 Minuten auf 210°C erhitzt, wobei das Pulver schmolz, die Fasern durchtränkte und an den Kreuzungspunkten miteinander verband. Die damit erhaltene Fasermatte zeigte keine Verfärbung.

### Verarbeitung nach dem RTM-Verfahren (RTM = Resin Transfer Molding):

Es wurde ein Kohlefasergelege ausgelegt, geerdet und das Pulver aus Beispiel 5 mittels elektrostatischem Sprühauftrag in einer Menge von 5 Gew.-%, bezogen auf Fasergewicht, aufgebracht. In einer anschließenden Ofenfahrt bei 150°C/20 sec wurde die Matte vorverfestigt. Anschließend wurde die vorverfestigte Matte in einem Preßwerkzeug in eine halbkugelförmige Form gebracht.
Das vorgebundene und vorgeformte Gewebe war formstabil und ließ sich problemlos ohne Formverlust in ein entsprechend geformtes Injektionswerkzeug überführen.

## Patentansprüche

1. Verwendung einer Vernetzbaren Polymerzusammensetzung als Bindemittel zur Herstellung von Formkörpern aus Fasermaterialien oder aus partikulären Materialien, jeweils aus mineralischen Materialien, Kunststoffen oder Naturstoffen, oder Kombinationen davon in Form deren wässrigen Polymerdispersion oder Polymerpulvers enthaltend
A) ein Copolymer, mit einer Glasübergangstemperatur Tg oder einer Schmelztemperatur von ≥ 30°C, aus einem oder mehreren Comonomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter, Carboxylgruppen enthaltender Comonomere, und
B) ein Copolymer aus einem oder mehreren Comonomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht der Comonomere, eines oder mehrerer ethylenisch ungesättigter Comonomere mit funktionellen Gruppen, welche mit den Carboxylgruppen des Copolymers A) eine kovalente Bindung eingehen können.

2. Verwendung nach Anspruch 1, **dadurch gekennzeichnet, dass** als Carboxylgruppen enthaltende Comonomere für Copolymer A) ethylenisch ungesättigte Mono- und Dicarbonsäuren oder Maleinsäureanhydrid copolymerisiert sind.

3. Verwendung nach Anspruch 2, **dadurch gekennzeichnet, dass** ein oder mehrere Comonomere aus der Gruppe umfassend Acrylsäure, Methacrylsäure, Crotonsäure, Itaconsäure, Fumarsäure, Maleinsäure und Maleinsäureanhydrid copolymerisiert sind.

4. Verwendung nach Anspruch 1 bis 3, **dadurch gekennzeichnet, dass** der Anteil an Carboxylgruppen enthaltender Comonomereinheiten in Copolymer A) 1 bis 30 Gew.-% beträgt.

5. Verwendung nach Anspruch 1 bis 4, **dadurch gekennzeichnet, dass** als Comonomere mit vernetzenden, funktionellen Gruppen für Copolymer B) ein oder mehrere aus der Gruppe der Comonomere mit Epoxid-, Hydroxy-, Aziridin-, Carbodiimid-, Oxazolin-, Alkohol-, Amin-, Aminosilan-, Amino-Formaldehyd-, Isocyanat-, N-2-Hydroxyalkylamid-Rest, copolymerisiert sind.

6. Verwendung nach Anspruch 5, **dadurch gekennzeichnet, dass** ein oder mehrere ethylenisch ungesättigte Comonomere mit Epoxid-, Hydroxy- und Isocyanatgruppen copolymerisiert sind.

7. Verwendung nach Anspruch 6, **dadurch gekennzeichnet, dass** ein oder mehrere Comonomere aus der Gruppe umfassend Glycidylacrylat, Glycidylmethacrylat, Allylglycidether, Vinylglycidether, Hydroxyethyl-, Hydroxypropyl- und Hydroxybutylester der Acrylsäure und Methacrylsäure, 2-Methyl-2-isocyanatopropylmethacrylat und Isopropenyl-dimethylbenzylisocyanat (TMI) copolymerisiert sind.

8. Verwendung nach Anspruch 1 bis 7, **dadurch gekennzeichnet, dass** der Anteil an vernetzende Gruppen enthaltenden Comonomereinheiten in Copolymer B) 1 bis 30 Gew.-%, bezogen auf das Gesamtgewicht der Comonomere, beträgt.

9. Verwendung nach Anspruch 1 bis 8, **dadurch gekennzeichnet, dass** das Mischungsverhältnis der beiden Copolymeren A) und B) von 1 : 99 bis 99 : 1 beträgt.

10. Verwendung nach Anspruch 1 bis 9, **dadurch gekennzeichnet, dass** Copolymer A) und B) in einem solchen Verhältnis vorliegen, dass das molare Verhältnis an funktionellen Comonomereinheiten von Copolymer A) zu Copolymer B) zwischen 5 : 1 und 1 : 5 variiert.

11. Verwendung nach Anspruch 1 bis 9, **dadurch gekennzeichnet, dass** Copolymer A) und B) in einem solchen Verhältnis vorliegen, dass das molare Verhältnis an funktionellen Comonomereinheiten von Copolymer A) zu Copolymer B) zwischen 2 : 1 und 1 : 2 variiert.

12. Verwendung nach Anspruch 1 bis 10, **dadurch gekennzeichnet, dass** Zusammensetzungen mit carboxylfunktionellem Styrol-n-Butylacrylat- und/oder Styrol-Methylmethacrylat-n-Butylacrylat-Copolymer als Copolymer A) und mit glycidylmethacrylathaltigem Styrol-n-Butylacrylat- und/oder Styrol-Methylmethacrylat-n-Butylacrylat-Copolymer als Copolymer B) vorliegen.

13. Verwendung nach Anspruch 1 bis 12, **dadurch gekennzeichnet, dass** die Polymerzusammensetzung in einer Menge von 3 bis 50 Gew.-%, bezogen auf das zu bindende Material eingesetzt wird.

14. Verwendung nach Anspruch 1 bis 13, **dadurch gekennzeichnet, dass** die Polymerzusammensetzung in trockener, pulverförmiger Form, in Form einer wässrigen Dispersion oder in organischen Lösemitteln gelöster Form erfolgt.

15. Verwendung nach Anspruch 1 bis 14, **dadurch gekennzeichnet, dass** die Polymerzusammensetzung als in Wasser redispergierbares Pulver verwendet wird.

16. Verwendung nach Anspruch 1 bis 15, **dadurch gekennzeichnet, dass** die Polymerzusammensetzung als Vorbinder in Fasermatten, Geweben und Gelegen für faserverstärkte Kunststoffe verwendet wird.

17. Verwendung nach Anspruch 1 bis 15, **dadurch gekennzeichnet, dass** die Polymerzusammensetzung als Bindemittel für Preforminganwendungen von Geweben und Gelegen in faserverstärkten Kunststoffen verwendet wird.

18. Verwendung nach Anspruch 1 bis 15, **dadurch gekennzeichnet, dass** die Polymerzusammensetzung als Trockenbindemittel in Kombination mit anderen pulverförmigen organischen oder anorganischen Substanzen verwendet wird.

19. Verwendung nach Anspruch 1 bis 15, **dadurch gekennzeichnet, dass** die Polymerzusammensetzung als Bindemittel zur Laminierung von Fasermatten auf expandierenden oder expandierten Partikelschaum verwendet wird.

20. Verwendung nach Anspruch 1 bis 15, **dadurch gekennzeichnet, dass** die Polymerzusammensetzung zum Kaschieren oder Laminieren zweier oder mehrerer Gewebe, Gelege oder Nonwovens miteinander, als Bindemittel zwischen den beiden miteinander zu verklebenden Substraten verwendet wird.

21. Verwendung nach Anspruch 1 bis 15, **dadurch gekennzeichnet, dass** die Polymerzusammensetzung in Pulverform zur Bindung von pulverförmigen Substraten in Fasermaterialien verwendet wird.

22. Verwendung nach Anspruch 1 bis 15, **dadurch gekennzeichnet, dass** die Polymerzusammensetzung zum Inmould-Skinning von expandierendem Partikelschaum verwendet wird.

## Claims

1. Use of a crosslinkable polymer composition as a binder for preparing shaped articles from fibre materials or from particulate materials each comprising mineral materials, plastics materials or natural materials or combinations thereof in the form of its aqueous polymer dispersion or polymer powder, including
A) a copolymer having a glass transition temperature Tg or a melting temperature of _ 30°C and containing units derived from one or more comonomers selected from the group consisting of vinyl esters of branched or unbranched alkylcarboxylic acids of 1 to 18 carbon atoms, acrylic esters or methacrylic esters of branched or unbranched alcohols of 1 to 15 carbon atoms, dienes, olefins, vinyl aromatics and vinyl halides and from 0.1 to 50% by weight, based on the total weight of the comonomers, of one or more ethylenically unsaturated carboxyl-containing comonomers, and
B) a copolymer containing units derived from one or more comonomers selected from the group consisting of vinyl esters of branched or unbranched alkylcarboxylic acids of 1 to 18 carbon atoms, acrylic esters or methacrylic esters of branched or unbranched alcohols of 1 to 15 carbon atoms, dienes, olefins, vinyl aromatics and vinyl halides and from 0.1 to 50% by weight, based on the total weight of the comonomers, of one or more ethylenically unsaturated comonomers having functional groups capable of entering a covalent bond with the carboxyl groups of said copolymer A).

2. Use according to Claim 1, **characterized in that** said carboxyl-containing comonomers copolymerized for said copolymer A) are ethylenically unsaturated mono- and dicarboxylic acids or maleic anhydride.

3. Use according to Claim 2, **characterized in that** one or more comonomers are selected from the group consisting of acrylic acid, methacrylic acid, crotonic acid, itaconic acid, fumaric acid, maleic acid and maleic anhydride.

4. Use according to any of Claims 1 to 3, **characterized in that** said copolymer A) contains 1 to 30% by weight of carboxyl-containing comonomer units.

5. Use according to any of Claims 1 to 4, **characterized in that** said copolymer B) comonomers having crosslinking, functional groups include one or more selected from the group of comonomers having an epoxide, hydroxyl, aziridine, carbodiimide, oxazoline, alcohol, amine, aminosilane, amino-formaldehyde, isocyanate, N-2-hydroxyalkylamide moiety.

6. Use according to Claim 5, **characterized in that** one or more ethylenically unsaturated comonomers having epoxide, hydroxyl and isocyanate groups have been copolymerized.

7. Use according to Claim 6, **characterized in that** one or more comonomers are selected from the group consisting of glycidyl acrylate, glycidyl methacrylate, allyl glycidyl ether, vinyl glycidyl ether, hydroxyethyl acrylate, hydroxypropyl acrylate, hydroxybutyl acrylate, hydroxyethyl methacrylate, hydroxypropyl methacrylate, hydroxybutyl methacrylate, 2-methyl-2-isocyanatopropyl methacrylate and isopropenyl dimethylbenzyl isocyanate (TMI).

8. Use according to any of Claims 1 to 7, **characterized in that** said copolymer B) contains 1 to 30% by weight of units derived from comonomers containing crosslinking groups, based on the total weight of the comonomers.

9. Use according to any of Claims 1 to 8, **characterized in that** the blend ratio of said two copolymers A) and B) is in the range from 1:99 to 99:1.

10. Use according to any of Claims 1 to 9, **characterized in that** said copolymers A) and B) are present in such a ratio that the molar ratio of functional comonomer units of copolymer A) to copolymer B) is in the range from 5:1 to 1:5.

11. Use according to any of Claims 1 to 9, **characterized in that** said copolymers A) and B) are present in such a ratio that the molar ratio of functional comonomer units of copolymer A) to copolymer B) is in the range from 2:1 to 1:2.

12. Use according to any of Claims 1 to 10, **characterized in that** said copolymer A) is a carboxyl-functional styrene-n-butyl acrylate and/or styrene-methyl methacrylate-n-butyl acrylate copolymer and said copolymer B) is a glycidyl methacrylate-containing styrene-n-butyl acrylate and/or styrene-methyl methacrylate-n-butyl acrylate copolymer.

13. Use according to any of Claims 1 to 12, **characterized in that** said polymer composition is used in an amount of 3 to 50% by weight, based on the material to be bound.

14. Use according to any of Claims 1 to 13, **characterized in that** said polymer composition is used in dry, pulverulent form, in the form of an aqueous dispersion or in solvent-dissolved form.

15. Use according to any Claims 1 to 14, **characterized in that** said polymer composition is used as a water-redispersible powder.

16. Use according to any of Claims 1 to 15, **characterized in that** said polymer composition is used as a prebinder in fibre mats, wovens and nonwoven scrims for fibre-reinforced plastics.

17. Use according to any of Claims 1 to 15, **characterized in that** said polymer composition is used as a binder for preforming applications of wovens and nonwoven scrims in fibre-reinforced plastics.

18. Use according to any of Claims 1 to 15, wherein said polymer composition is used as a dry binder in combination with other pulverulent organic or inorganic substances.

19. Use according to any of Claims 1 to 15, **characterized in that** said polymer composition is used as a binder for laminating fibre mats onto expanding or expanded bead foam.

20. Use according to any of Claims 1 to 15, **characterized in that** said polymer composition is used for laminating two or more wovens, nonwoven scrims or nonwovens together, as a binder between the two substrates to be adhered together.

21. Use according to any of Claims 1 to 15, **characterized in that** said polymer composition is used in powder form for binding pulverulent substrates in fibre materials.

22. Use according to any of Claims 1 to 15, **characterized in that** said polymer composition is used for in-mould skinning of expanding bead foam.

## Revendications

1. Utilisation d'une composition polymère réticulable comme liant pour la préparation de corps façonnés en matériaux fibreux ou en matériaux sous forme de particules, à chaque fois à base de matériaux minéraux, synthétiques ou naturels ou des combinaisons de ceux-ci, sous forme de sa dispersion aqueuse de polymère ou sa poudre de polymère, contenant
A) un copolymère présentant une température de transition vitreuse Tg ou une température de fusion ≥30°C, constitué par un ou plusieurs comonomères du groupe comprenant les esters vinyliques d'acides alkylcarboxyliques non ramifiés ou ramifiés, comprenant 1 à 18 atomes de carbone, les esters de l'acide acrylique ou méthacrylique d'alcools ramifiés ou non ramifiés comprenant 1 à 15 atomes de carbone, les diènes, les oléfines, les aromatiques de vinyle et les halogénures de vinyle et par 0,1 à 50% en poids, par rapport au poids total des comonomères, d'un ou de plusieurs comonomères éthyléniquement insaturés contenant des groupements carboxyle et
B) un copolymère constitué par un ou plusieurs comonomères du groupe comprenant les esters vinyliques d'acides alkylcarboxyliques non ramifiés ou ramifiés comprenant 1 à 18 atomes de carbone, les esters de l'acide acrylique ou méthacrylique d'alcools ramifiés ou non ramifiés comprenant 1 à 15 atomes de carbone, les diènes, les oléfines, les aromatiques de vinyle et les halogénures de vinyle et par 0,1 à 50% en poids, par rapport au poids total des comonomères, d'un ou de plusieurs comonomères éthyléniquement insaturés avec des groupements fonctionnels qui peuvent former une liaison covalente avec les groupements carboxyle du copolymère A).

2. Utilisation selon la revendication 1, **caractérisée en ce que** des acides monocarboxyliques ou dicarboxyliques éthyléniquement insaturés ou l'anhydride de l'acide maléique sont copolymérisés en tant que comonomères contenant des groupements carboxyle pour le copolymère A).

3. Utilisation selon la revendication 2, **caractérisée en ce qu'**un ou plusieurs comonomères du groupe constitué par l'acide acrylique, l'acide méthacrylique, l'acide crotonique, l'acide itaconique, l'acide fumarique, l'acide maléique et l'anhydride de l'acide maléique sont copolymérisés.

4. Utilisation selon la revendication 1 à 3, **caractérisée en ce que** la proportion d'unités comonomères contenant des groupements carboxyle dans le copolymère A) est de 1 à 30% en poids.

5. Utilisation selon la revendication 1 à 4, **caractérisée en ce qu'**un ou plusieurs comonomères, du groupe des comonomères avec un radical époxyde, hydroxy, aziridine, carbodiimide, oxazoline, alcool, amine, aminosilane, aminoformaldéhyde, isocyanate, N-2-hydroxyalkylamide sont copolymérisés en tant que comonomères avec des groupements réticulants, fonctionnels pour le copolymère B).

6. Utilisation selon la revendication 5, **caractérisée en ce qu'**un ou plusieurs comonomères éthyléniquement insaturés avec des groupements époxyde, hydroxy et isocyanate sont copolymérisés.

7. Utilisation selon la revendication 6, **caractérisée en ce qu'**un ou plusieurs comonomères du groupe comprenant l'acrylate de glycidyle, le méthacrylate de glycidyle, l'allylglycidyléther, le vinylglycidyléther, l'ester hydroxyéthylique, hydroxypropylique et hydroxybutylique de l'acide acrylique et de l'acide méthacrylique, le méthacrylate de 2-méthyl-2-isocyanatopropyle et l'isopropényldiméthylbenzylisocyanate (TMI) sont copolymérisés.

8. Utilisation selon la revendication 1 à 7, **caractérisée en ce que** la proportion d' unités comonomères contenant des groupements réticulants dans le copolymère B) est de 1 à 30% en poids par rapport au poids total des comonomères.

9. Utilisation selon la revendication 1 à 8, **caractérisée en ce que** le rapport de mélange des deux copolymères A) et B) est de 1 : 99 à 99 : 1.

10. Utilisation selon la revendication 1 à 9, **caractérisée en ce que** le copolymère A) et le copolymère B) se trouvent dans un rapport tel que le rapport molaire des unités comonomères fonctionnelles du copolymère A) à celles du copolymère B) varie entre 5 : 1 et 1 : 5.

11. Utilisation selon la revendication 1 à 9, **caractérisée en ce que** le copolymère A) et le copolymère B) se trouvent dans un rapport tel que le rapport molaire des unités comonomères fonctionnelles du copolymère A) à celles du copolymère B) varie entre 2 : 1 et 1 : 2.

12. Utilisation selon la revendication 1 à 10, **caractérisée en ce que** des compositions avec un copolymère de styrène-acrylate de n-butyle et/ou de styrène-méthacrylate de méthyle-acrylate de n-butyle à fonctionnalité carboxyle forment le copolymère A) et des compositions avec un copolymère de styrène-acrylate de n-butyle et/ou de styrène-méthacrylate de méthyle-acrylate de n-butyle contenant du méthacrylate de glycidyle forment le copolymère B).

13. Utilisation selon la revendication 1 à 12, **caractérisée en ce que** la composition polymère est utilisée en une quantité de 3 à 50% en poids par rapport au matériau à lier.

14. Utilisation selon la revendication 1 à 13, **caractérisée en ce que** la composition polymère se trouve sous forme de poudre, sèche, sous forme d'une dispersion aqueuse ou sous une forme dissoute dans des solvants organiques.

15. Utilisation selon la revendication 1 à 14, **caractérisée en ce que** la composition polymère est utilisée sous forme d'une poudre redispersible dans l'eau.

16. Utilisation selon la revendication 1 à 15, **caractérisée en ce que** la composition polymère est utilisée comme préliant dans des nattes de fibres, des tissus et des mats pour des matériaux synthétiques renforcés par des fibres.

17. Utilisation selon la revendication 1 à 15, **caractérisée en ce que** la composition polymère est utilisée comme liant pour des utilisations de préformage de tissus et de mats dans des matériaux synthétiques renforcés par des fibres.

18. Utilisation selon la revendication 1 à 15, **caractérisée en ce que** la composition polymère est utilisée comme liant sec en combinaison avec d'autres substances organiques ou inorganiques sous forme de poudre.

19. Utilisation selon la revendication 1 à 15, **caractérisée en ce que** la composition polymère est utilisée comme liant pour le laminage de nattes de fibres sur de la mousse de particules expansible ou expansée.

20. Utilisation selon la revendication 1 à 15, **caractérisée en ce que** la composition polymère est utilisée pour le contre-collage ou le laminage de deux tissus, mats ou non-tissés ou plus, les uns avec les autres, comme liant entre deux substrats à assembler l'un avec l'autre par collage.

21. Utilisation selon la revendication 1 à 15, **caractérisée en ce que** la composition polymère est utilisée sous forme de poudre pour lier des substrats en forme de poudre dans des matériaux fibreux.

22. Utilisation selon la revendication 1 à 15, **caractérisée en ce que** la composition polymère est utilisée pour l'enrobage dans le moule de mousse de particules expansible.
